# EUROPEAN PATENT APPLICATION

(11) **EP 4 174 031 A1**
(43) Date of publication of application: **03.05.2023**
(21) Application number: 21204646.0
(22) Date of filing: 26.10.2021
(51) Int. Cl.: C02F 1/00, B01D 35/26, B01D 24/16, C02F 1/32, C02F 1/68, C02F 1/28, C02F 1/42, B01D 24/42, B01D 24/48, B01D 35/143

(54) **LIQUID TREATMENT DEVICE**

(71) Applicant: BRITA SE, 65232 Taunusstein (DE)
(72) Inventor: LOTT, Hanno, 65520 Bad Camberg (DE); BERNARD, Dominik, 55118 Mainz (DE); HARTMANN, Tim, 65232 Taunusstein (DE)

(57) **Abstract**

A liquid treatment device (1) comprises a housing (2) with a raw liquid container (3) and with a treated liquid container (4), whereby the raw liquid container (3) can be filled with a liquid (8) through an raw water container opening (13) located at a top (12) of the housing (2). The raw liquid container (3) is arranged above the treated liquid container (4) and liquid conductively connected to the treated liquid container (4), which allows for a gravity driven flow of liquid (8) from the raw liquid container (3) into the treated liquid container (4). The liquid treatment device (1) further comprises a treatment cartridge (18) with at least one treatment medium (22) contained within the treatment cartridge (18), whereby the treatment cartridge (18) has one or more inlet openings (20) at a lower part of the treatment cartridge (18) that allow for a liquid intake below the treatment medium (22) and a liquid flow upwards through the treatment medium (22) before the treated liquid (8) exits the treatment cartridge (18) through an outlet opening (23). The treatment cartridge (18) is mounted at a cover (11) which covers at least a part of the raw liquid container opening (13). The treatment cartridge (18) is in operative connection with a pump device (28) with which the liquid (8) can be pumped from the raw liquid container (3) into the treatment cartridge (18).

## Description

### Technical Field

The invention relates to a liquid treatment device comprising a housing with a raw liquid container and with a treated liquid container, whereby the raw liquid container can be filled with a liquid through an raw water container opening located at a top of the housing, whereby the raw liquid container is arranged above the treated liquid container and liquid conductively connected to the treated liquid container, which allows for a gravity driven flow of liquid from the raw liquid container into the treated liquid container, the liquid treatment device further comprising a treatment cartridge with at least one treatment medium contained within the treatment cartridge, whereby the treatment cartridge has one or more inlet openings at a lower part of the treatment cartridge that allow for a liquid intake below the treatment medium and a liquid flow upwards through the treatment medium before the treated liquid exits the treatment cartridge through an outlet opening, and whereby the treatment cartridge is arranged within the raw liquid container and the outlet opening of the treatment cartridge is liquid conductively connected to the treated liquid container.

### Background of the invention

Liquid treatment devices are well-known and widely used for filtering or treating drinking water in household applications. The volume of the raw liquid container and the usually equally large volume of the treated liquid container is often in the range of 0.5 to 2 liters. Thus, the liquid treatment device can be manually handled and moved without undue burden, but the quantity of drinking water that will be treated after one complete fill of the raw liquid container is usually sufficient for e.g., preparing hot or cold beverages for one or a few persons. Due to the design of the liquid treatment device and the arrangement of the raw liquid container above the treated liquid container, it is only required to fill the raw liquid container with the desired quantity of liquid, i.e., with raw water, and to wait for a short time that is required for the raw water to flow through the treatment cartridge into the treated liquid container. The treated liquid accumulates in the treated liquid container and can be removed e.g., by tilting the housing and poured out of the treated liquid container.

Most of these liquid treating devices comprise a treatment cartridge that is arranged between the raw liquid container and the treated liquid container in such a manner that the liquid that flows from the raw liquid container into the treated liquid container must pass through the treatment cartridge. An inlet opening of the treatment container is liquid conductively connected to the raw liquid container, whereas an outlet opening is liquid conductively connected to the treated liquid container. Due to the gravity driven flow of the liquid, the inlet opening is usually arranged at a top region of the treatment cartridge and the outlet opening is arranged at a bottom region of the treatment cartridge. Thus, the liquid flows through the treatment cartridge from the top to the bottom, driven by gravity.

However, some treatment cartridges are designed to provide for a reverse flow direction of the liquid, i.e., the liquid enters at a bottom region into the treatment cartridge and must flow upwards until an upper reversal point is passed. Usually, the flow direction of the treated liquid changes at the upper reversal point and leads back down to an outlet of the treatment cartridge that is also arranged at the bottom region of the treatment cartridge. The upward flow of the liquid that enters through the inlet at the bottom of the treatment cartridge and flows through the treatment medium that is contained within the treatment cartridge is usually driven by suction forces that are caused by the liquid that passes the upper reversal point and flows downward to the outlet opening, thereby creating a low-pressure region next to the upper reversal point causing liquid from below the upper reversal point to flow into the low-pressure region and to follow the liquid that has passed the upper reversal point and that has already exited the treatment cartridge through the outlet opening.

Even though such treatment cartridges with an upward flow direction provide for several advantages, they also have one drawback when compared to treatment cartridges with a downward flow direction, as the continuous flow of the liquid through the treatment cartridge requires once a rise of the liquid inside the treatment cartridge above the upper reversal point to create the suction forces that will suck up more liquid from the bottom region up to and above the upper reversal point, thereby creating a continuous upward flow of liquid through the treatment container until the raw liquid container is empty and no more liquid can be sucked up into the low-pressure region at the upper reversal point. Thus, the treatment of the liquid that is filled into the raw liquid container and a continuous flow of liquid through the treatment cartridge does not begin until the filling level of the liquid inside the raw liquid container rises above the upper reversal point within the treatment container. For this reason, these treatment cartridges are usually arranged and mounted at the bottom of the raw liquid container, and they are designed to not reach up to the upper end of the raw liquid container. However, mounting the treatment cartridge at the bottom of the raw liquid container usually requires to remove a cover and to insert the treatment cartridge into a seating at the bottom of the raw liquid container, whereby usually the treatment cartridge itself prevents the view of the seating during the insertion of the treatment cartridge. Furthermore, obtaining information about the current status of the treatment cartridge and e.g., a level of depletion of the treatment medium inside the treatment cartridge requires either a wired or wireless connection of the treatment cartridge with a display unit that is visible from outside of the housing.

Accordingly, there is a need for a liquid treatment device that allows for the use of a treatment cartridge with an upward flow inside the treatment cartridge, but also allows for an easy mounting and for a cost-effective data connection for transmitting information transmission to e.g. a display unit.

### Summary of the invention

The present invention relates to a liquid treatment device as described above, whereby the treatment cartridge is mounted at a cover which covers at least a part of the raw liquid container opening. The raw liquid container opening and thus the cover is at the top of the housing and thus easily accessible for a user. By mounting the treatment cartridge at the cover, a first insertion or subsequent replacement of the treatment cartridge is facilitated and can be performed without the need to manually insert a bottom of the treatment cartridge into a cartridge seating at the bottom of the raw liquid container. Furthermore, the mounting of the treatment cartridge at the cover allows for many possibilities and embodiments for providing a wired data transmission from the treatment cartridge to the cover and e.g. to a display unit or a data processing unit that is arranged within or on the cover.

The treatment cartridge can be mounted within a mounting device that is formed by the cover or that is fastened to the cover. The mounting device can provide for a positive fit that defines the position of the treatment cartridge below the cover and within the raw liquid container. Preferably, the size of the treatment device is adapted to the distance between the cover and the bottom of the raw liquid container such that the bottom of the treatment cartridge contacts the bottom of the raw liquid container. Thus, the outlet opening of the treatment cartridge that is located at the bottom of the treatment cartridge can be arranged in such a manner as to provide a liquid conductive connection to an opening in the raw liquid container that runs into the treated liquid container that is arranged below the raw liquid container. The treatment cartridge may extend from the bottom of the raw liquid container up to an upper region of the raw liquid container or even up to the cover that covers the raw liquid container opening. If the top of the treatment cartridge is at a distance to the cover, a gap between the top of the treatment cartridge and the cover can be used to arrange additional means within this gap, e.g. measurement means or fastening means or optionally available additional treatment means adapted to the top of the treatment cartridge.

According to an advantageous aspect of the invention, the treatment cartridge is in operative connection with a pump device with which the liquid can be pumped from the raw liquid container into the treatment cartridge. Thus, there is no need to fill a large quantity into the raw liquid container in order to raise the filling level above the upper reversal point within the treatment cartridge in order to begin with and create a continuous flow of liquid through the treatment device. By operating the pump device, even a small amount of liquid that is within the raw liquid container can be pumped into the treatment device and can be sucked or pumped upwards until some liquid reaches the upper reversal point, changes the direction and flows downward to the outlet opening of the treatment cartridge, thereby causing a low-pressure next to the upper reversal point and starting the continuous flow of liquid through the treatment cartridge.

The pump device may comprise a manually operated pump or an electric pump. The pump device is not limited to a specific pumping mechanism. However, if the pump device is located at or within the treatment cartridge and thus will be replaced together with the treatment cartridge after depletion of the treatment medium, the pump device is preferably such that the pump device can be manufactured and added to the treatment cartridge at low cost.

According to an advantageous embodiment of the invention, the pump device is mounted at the cover and arranged on top of the treatment cartridge. Thus, the pump device can remain with the cover and will not be replaced together with the treatment cartridge. Furthermore, the pump device that is arranged at the cover can be easily accessed and manually operated by a user without any need to remove the cover or to access an interior of the raw liquid container.

It is considered an advantageous aspect of the invention that the pump device, when actuated, creates a low-pressure, which causes the liquid to be sucked into the treatment cartridge. The pump device may comprise an elastic bag that can be manually compressed and that during expanding afterwards provides for a sucking force that sucks remaining air and entering liquid upwards through the treatment cartridge. According to an alternative embodiment, the pump device may comprise different means for creating a low-pressure that causes liquid from the raw liquid container to enter the treatment cartridge and to rise and flow above the upper reversal point of the treatment container, starting a continuous flow of liquid through the treatment cartridge. Such a pump device can be located at a top region inside the treatment cartridge or on top of but outside of the treatment cartridge.

According to a preferred embodiment of the invention, the pump device has an actuator plate which can be pushed towards the cartridge to actuate the pump. Such an actuator plate can be supported in the cover and can be operated from the outside of the cover, which facilitates manual actuation of the pump device. Furthermore, the actuator plate and possibly additional components of the pump device are a part of the cover and will not be replaced each time the treatment cartridge must be replaced due to depletion of the treatment medium.

According to another favorable aspect of the invention, the liquid treatment device comprises a raw liquid measuring device with a measuring point within the raw liquid container, and with a treated liquid measuring device with a measuring point within the treatment cartridge. As the treatment cartridge is also located within the raw liquid container, the two measuring devices can be located near each other and the distance between the two measuring devices can be relatively small, which allows for a reduced costs and space requirements for manufacturing the corresponding interconnecting lines that connect the measurement devices with a display unit or a data processing unit that is located at or within the cover. Furthermore, there is no need to locate a separate measuring device within the interior of the treated liquid container for measuring characteristics of the treated liquid that flows into the treated liquid container.

Preferably, the raw liquid measuring device is mounted at the cover. The raw liquid measuring device may comprise a sensor which protrudes into the interior of the raw liquid container. The raw liquid measuring device may also comprise a sensor that is mounted close to the bottom at an interior wall of the raw liquid container or at the bottom of the raw liquid container. The sensor can be connected to a sensor evaluation device by wire or wirelessly, whereby the sensor evaluation device is arranged at the cover. The sensor evaluation device can be connected with or can form a part of a display unit that displays information e.g. about the liquid treatment that is performed with the liquid treatment device or about the treatment cartridge and an assessment of upcoming depletion of the treatment medium within the treatment cartridge.

Furthermore, and according to a possible embodiment of the invention, the treated liquid measuring device is mounted at the cover. The treated liquid measuring device can also be arranged at or near the cover and can also comprise a sensor that protrudes into the interior of the treatment cartridge.

It is also possible that a sensor is arranged inside the treatment cartridge, and that a wired or wireless connection to an evaluation device is established during or after the insertion of the treatment cartridge into the liquid treatment device. The evaluation device may be arranged at or within the cover or at any other location of the liquid treatment device. According to another embodiment of the invention, the liquid treatment device only comprises sensor elements and a data transmission device that receives sensor data from the sensor elements and transmits the received sensor elements to a receiver that is located at a distance to the liquid treatment device, e.g. a smartphone of a user or a central data processing and storage unit that allows for the evaluation of many different liquid treatment devices.

The raw liquid measuring device and the treated liquid measuring device as well as additional measurement devices can be used to obtain information e.g. about the quality or other characteristics of the raw liquid and the quality or other characteristics of the treated liquid after flowing through the treatment cartridge, or about the conductivity or hardness in case of water as the liquid that is treated by the liquid treatment device, or about the current status and estimated remaining service life until depletion of the treatment medium.

According to another embodiment of the invention, the cover comprises a cartridge holder for the treatment cartridge. The cover may comprise a hole or opening for inserting the treatment cartridge into a cartridge holder that is a part of or fastened to the cover. The cartridge holder can be a cage-like structure with an opening at the top for inserting the treatment cartridge into the cartridge holder. It is also possible that the cartridge holder comprises lateral struts that form guide elements for an interlocking reception of the treatment cartridge. The cartridge holder may also be formed by a ring-like seating structure that surrounds an opening within the cover.

It is considered another advantageous aspect of the invention that the cartridge holder provides for a receptacle that allows to arrange an additional treatment device on top of the treatment cartridge. The additional treatment device can provide for a different type of treatment, e.g. for additional irradiation with UV light in order to reduce a viral or bacterial load of the liquid. It is also possible to add a dosing device that adds additives that affect the liquid that flows through the treatment cartridge. The additives can be added in order to improve some characteristics of the liquid like e.g. mineral content or taste of drinking water as liquid. Due to the receptacle that is available for arranging such an additional treatment device on top of the treatment cartridge, the use of such an additional treatment device is optional and does not require any modifications of the housing or the use of a different treatment cartridge.

According to a favorable aspect of the invention, the cartridge holder comprises a spring device that presses the treatment cartridge away from the cover in the direction of a bottom of the raw liquid container. Thus, after proper insertion of the treatment cartridge into the cartridge holder, a spring device presses the treatment cartridge downwards and onto the bottom of the raw liquid container which supports a liquid-tight sealing of the outlet opening of the treatment cartridge at the bottom of the treatment cartridge and the opening that opens into the treated liquid container. The spring device can comprise a spiral spring or several spiral springs that rest on the cover and generate spring forces in the direction of the bottom of the raw liquid container. The spring device can also comprise an elastic The spring device can be fastened at the cover after the insertion of the treatment cartridge into the cartridge holder. It is also possible to provide for an operative connection between the spring device and the treatment cartridge that can be suspended or disconnected during insertion of the treatment cartridge into the cartridge holder and subsequently reattached or reconnected to generate the spring force that presses the treatment cartridge onto the opening within the bottom of the raw liquid container that opens into the treated liquid container.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic cross-sectional view of a liquid treatment device with a raw liquid container and a treated liquid container, whereby a treatment cartridge is mounted at a cover that covers a raw liquid container opening,
Figure 2 illustrates a schematic cross-sectional view of a part of another embodiment of the liquid treatment device with measuring devices for the raw liquid and for the treated liquid, and
Figure 3 illustrates a schematic cross-sectional view of yet another embodiment of the liquid treatment device with an additional treatment device mounted on top of the treatment cartridge.

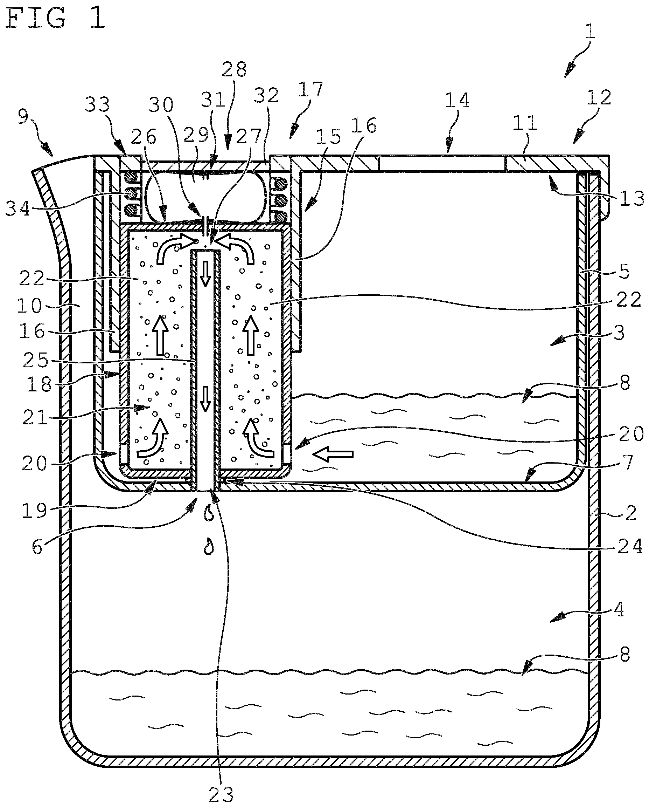

A liquid treatment device 1 that is illustrated in the cross-sectional view of figure 1 comprises a housing 2 with a raw liquid container 3 and a treated liquid container 4, whereby the raw liquid container 3 is formed by an insert 5 that is mounted into a receiving seating of the housing 2 that is not shown in figure 1. The treated liquid container 4 is formed by a lower part of the housing 2, whereas the raw liquid container 3 is arranged above the treated liquid container 4. An opening 6 in a bottom 7 of the raw liquid container 3 opens into the treated liquid container 4 below and provides for a liquid conductive connection between the raw liquid container 3 and the treated liquid container 4. A liquid 8 that is filled into the raw liquid container 3 will flow through the opening 6 into the treated liquid container 4 and will be collected within the treated liquid container 4 until a user withdraws the liquid 8 from the treated liquid container 4 by tilting the housing 2 and by pouring the liquid 8 out of a withdrawal opening 9 that is arranged at an upper part of the housing 2 and liquid conductively connected to the lower part of the housing 2 and the treated liquid container 4 by a withdrawal channel 10.

A cover 11 covers a top 12 of the housing 2 and therefore also covers the raw liquid container 3 that is arranged in the upper region of the housing 2 as well as a raw liquid container opening 13 at the top 12 of the housing 2. An opening 14 within the cover 11 allows for filling the liquid 8 through the raw liquid container opening 13 into the raw liquid container 3 without the need to remove the cover 11 from the housing 2. The opening 14 in the cover 11 can be closed by a pivotable lid that is not shown in figure 1.

The cover 11 comprises a cartridge holder 15 with lateral struts 16 that are arranged along a peripheral edge of an opening 17 within the cover 11 and that protrude from the cover 11 downwards in a direction toward the bottom 7 of the raw liquid container 3. A treatment cartridge 18 can be inserted from above the cover 11 through the opening 17 into the cartridge holder 15 and pushed downwards until a bottom 19 of the treatment cartridge 18 touches the bottom 7 of the raw liquid container 3. The treatment cartridge 18 has several inlet openings 20 at a lower part of the treatment cartridge 18 that is close to the bottom 7 of the raw liquid container 3. An interior 21 of the treatment cartridge 18 is filled with a treatment medium 22, e.g. a granule comprising activated carbon and a ion exchange material.

An outlet opening 23 of the treatment cartridge 18 is located in the center of the bottom 19 of the treatment cartridge 18. After proper insertion of the treatment cartridge 18 into the cartridge holder 15 of the cover 11, the outlet opening 23 of the treatment cartridge 18 protrudes through the opening 6 in the bottom 7 of the raw liquid container 3. A sealing 24 prevents unwanted leakage of the liquid 8 from the raw liquid container 3 through the opening 6 in the bottom 7 of the raw liquid container 3 without flowing through the treatment cartridge 18. An outlet conduct 25 runs inside the treatment cartridge 18 from the outlet opening 23 upwards to just below a top 26 of the treatment cartridge 18, thereby forming a siphon inside the treatment cartridge 18. The liquid 8 that enters through the inlet openings 20 at a lower part of the treatment cartridge 18 must flow through the treatment medium 22 and rise above the upper end of the outlet conduct 25 which forms an upper reversal point 27 for the liquid 8, which can then enter into the outlet conduct 25 and flow downwards to the outlet opening 23 of the treatment cartridge 18 and into the treated liquid container 4.

As soon as a first amount of the liquid 8 rises above the upper reversal point 27 and flows downwards through the outlet conduct 25, this causes a second amount of the liquid 8 to enter through the inlet openings 20 into the treatment cartridge 18 and to flow upwards against gravitational forces up to the upper reversal point 27 and to follow the first amount of the liquid 8 through the outlet conduct 25 and the outlet opening 23 into the treated liquid container 4. Thus, a continuous flow of the liquid 8 from the raw liquid container 3 through the treatment cartridge 18 into the treated liquid container 4 can be started by filling the raw liquid container 3 with the liquid 8 until the filling level of the liquid 8 rises above the upper reversal point 27 insider the treatment cartridge 18.

A pump device 28 is located at the cover 11 above the top 26 of the treatment cartridge 18. By operating the pump device 28, the liquid 8 is sucked into the treatment cartridge 18 and the liquid 8 is forced to rise up to the upper reversal point 27, thereby starting the continuous flow of the liquid 8 from the raw liquid container 3 through the treatment cartridge 18 into the treated liquid container 4. Thus, the discharge of the liquid 8 from the raw liquid container 3 into the treated liquid container 4 can be started as soon as there is a small amount of liquid 8 filled into the raw liquid container 3, i.e. long before the filling level of the liquid 8 within the raw liquid container rises up to the upper reversal point 27 of the treatment cartridge 18.

The pump device 28 can be of any kind that is suitable for sucking or pumping the liquid 8 into the treatment cartridge 18. By way of example, the pump device 28 shown in figure 1 comprises an elastic bag 29 with an inlet valve 30 that runs into the treatment cartridge 18 and with an outlet valve 31 that is arranged at a top side of the elastic bag 29 and directed outwards. The pump device 28 also comprises an actuator plate 32 that can be manually pressed downwards, thereby compressing the elastic bag 29 and forcing a discharge of air through the outlet valve 31. After releasing the actuator plate 32, the elastic bag 29 returns to its original shape and volume, thereby sucking in air through the inlet valve 30 from the interior of the treatment cartridge 18, which creates a low-pressure inside the treatment cartridge 18 that causes the liquid 8 to rise through the treatment medium 22 up to the upper reversal point 27 and starting a continuous flow of the liquid 8 through the treatment cartridge 18.

The cover 11 also comprises an insert with a spring device 33. The spring device 33 comprises a spiral spring 34 that rests against an upper stop and presses the treatment cartridge 18 in the direction of the bottom 7 of the raw liquid container 3, thereby supporting a tight sealing of the opening 6 with the sealing 24 and preventing an unwanted leakage of the liquid 8 from the raw liquid container 3 into the treated liquid container 4 by bypassing the treatment cartridge 18.

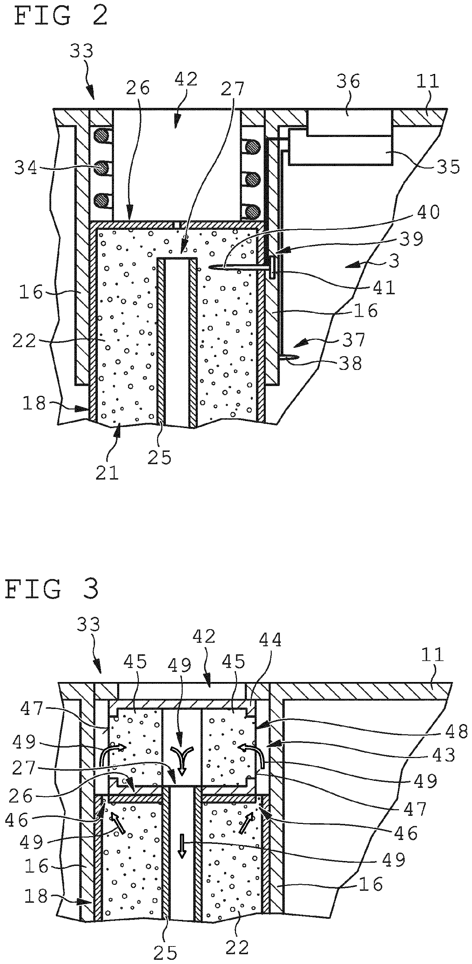

Figure 2 illustrates another embodiment of the liquid treatment device 1 which is similar to the embodiment shown in figure 1 for most aspects, thus only aspects and features that differ are explained below. The cover 11 also comprises a data processing unit 35 and a display unit 36 which can be viewed from the outside of the housing 2. A raw liquid measurement device 37 comprises a raw liquid sensor element 38 that is located at a lateral strut 16 that protrudes downwards into the raw liquid container 3. The raw liquid sensor element 38 is wired to the data processing unit 35 for transmitting sensor data to the data processing unit 35. A treated liquid measurement device 39 comprises a treated liquid sensor element 40 that is arranged inside of the treatment cartridge 18 and part of the treatment cartridge 18. The treated liquid sensor element 40 is connected to a contact plate 41 located at the lateral strut 16, whereby the contact plate 41 which is also wired to the data processing unit 35. Thus, after proper insertion of the treatment cartridge 18 into the cartridge holder 15, the data processing unit 35 can receive sensor data from the raw liquid measurement device 37 and from the treated liquid measurement device 39. The processed sensor data can be displayed with the display unit 36.

Above the top 26 of the treatment device 18 is a receptacle 42 that allows for mounting e.g. the pump device 28 or any additional device for performing the treatment of the liquid 8 with the liquid treatment device 1.

Figure 3 illustrates yet another embodiment of the liquid treatment device 1. The receptacle 42 holds a modified version of a pump device 28 as well as an additional treatment device 43 with a ring-shaped additional container 44 that is docked onto the top 26 of the treatment cartridge 18. The additional container 44 may comprise a fluid or solid compound 45 that will be gradually discharged into the interior of the treatment cartridge 18, thereby providing an additional treatment of the liquid 8 that flows through the treatment cartridge 18.

## Claims

1. Liquid treatment device (1) comprising a housing (2) with a raw liquid container (3) and with a treated liquid container (4), whereby the raw liquid container (3) can be filled with a liquid (8) through an raw water container opening (13) located at a top (12) of the housing (2), whereby the raw liquid container (3) is arranged above the treated liquid container (4) and liquid conductively connected to the treated liquid container (4), which allows for a gravity driven flow of liquid (8) from the raw liquid container (3) into the treated liquid container (4), the liquid treatment device (1) further comprising a treatment cartridge (18) with at least one treatment medium (22) contained within the treatment cartridge (18), whereby the treatment cartridge (18) has one or more inlet openings (20) at a lower part of the treatment cartridge (18) that allow for a liquid intake below the treatment medium (22) and a liquid flow upwards through the treatment medium (22) before the treated liquid (8) exits the treatment cartridge (18) through an outlet opening (23), and whereby the treatment cartridge (18) is arranged within the raw liquid container (3) and the outlet opening (23) of the treatment cartridge (18) is liquid conductively connected to the treated liquid container (4), **characterized in that** the treatment cartridge (18) is mounted at a cover (11) which covers at least a part of the raw liquid container opening (13).

2. Liquid treatment device (1) according to claim 1, **characterized in that** the treatment cartridge (18) is in operative connection with a pump device (28) with which the liquid (8) can be pumped from the raw liquid container (3) into the treatment cartridge (18).

3. Liquid treatment device (1) according to claim 2, **characterized in that** the pump device (28) is mounted at the cover (11) and arranged on top (26) of the treatment cartridge (18).

4. Liquid treatment device (1) according to claim 2 or claim 3, **characterized in that** the pump device (28), when actuated, creates a low-pressure, which causes the liquid (8) to be sucked into the treatment cartridge (18).

5. Liquid treatment device (1) according to one of the preceding claims 2 to 4, **characterized in that** the pump device (28) has an actuator plate (32) which can be pushed towards the treatment cartridge (18) to actuate the pump device (28).

6. Liquid treatment device (1) according to one of the preceding claims, **characterized in that** the liquid treatment device (1) comprises a raw liquid measuring device (37) with a measuring point within the raw liquid container (3), and with a treated liquid measuring device (39) with a measuring point within the treatment cartridge (18).

7. Liquid treatment device (1) according to claim 6, **characterized in that** the raw liquid measuring device (37) is mounted at the cover (11).

8. Liquid treatment device (1) according to claim 6 or claim 7, **characterized in that** the treated liquid measuring device (39) is mounted at the cover (11).

9. Liquid treatment device (1) according to one of the preceding claims, **characterized in that** the cover (11) comprises a cartridge holder (15) for the treatment cartridge (18).

10. Liquid treatment device (1) according to claim 9, **characterized in that** the cartridge holder (15) provides for a receptacle (42) that allows to arrange an additional treatment device (43) on top of the treatment cartridge (18).

11. Liquid treatment device (1) according to claim 9 or claim 10, **characterized in that** the cartridge holder (15) comprises a spring device (33) that presses the treatment cartridge (18) away from the cover (11) in the direction of a bottom (7) of the raw liquid container (3).
